# EUROPEAN PATENT APPLICATION

(11) **EP 4 534 956 A1**
(43) Date of publication of application: **09.04.2025**
(21) Application number: 23275145.3
(22) Date of filing: 06.10.2023
(51) Int. Cl.: G01C 21/16, G01S 19/49

(54) **IMPROVED NAVIGATION SYSTEM**

(71) Applicant: ATLANTIC INERTIAL SYSTEMS LIMITED, Plymouth, Devon PL6 6DE (GB)
(72) Inventor: WILKINSON, Nicholas Robert, Plymouth, Devon, PL6 6DE (GB); HENDERSON, Geoffrey Thomas, Plymouth, Devon, PL6 6DE (GB)
(74) Representative: Dehns

(57) **Abstract**

A navigation system comprises a plurality of information sources for use in determining a position estimate, including an inertial navigation system which determines an inertial-based position estimate, and a receiver which receives wireless signals from external transmitters. A first calculation unit repeatedly determines a first position estimate based on information derived from one or more of the information sources. A second calculation unit repeatedly determine a second position estimate based on information derived from one or more of the information sources. A selection unit repeatedly determines which of the first and second position estimates is more reliable, and selects one of these for output as an output position estimate. Over a period of time, first position estimate is determined based on a first set of information derived from one or more of the information sources, and the second position estimate is determined based on a second set of information. The first set of information contains a subset of information that is not contained in the second set of information.

## Description

### FIELD

The present disclosure relates to the field of navigation systems, particularly navigation systems for use on aircraft.

### BACKGROUND

Integrated navigation systems often combine navigation data obtained from multiple sources in order to arrive at an accurate blended navigation solution. Many different sources of navigation data can be used, including Inertial Navigation Systems (INS), Terrain-Referenced Navigation (TRN), and Global Navigation Satellite Systems (GNSS) such as GPS, Galileo, GLONASS, etc.

Inertial navigation integrates angular rate and linear acceleration measurements, obtained using inertial sensors such as gyroscopes and accelerometers, in order to determine the attitude, velocity and position of a navigation system. One downside of inertial navigation is that the sensors used have errors which are integrated and thus cause the position and velocity outputs to drift over time. This issue is particularly prominent in smaller and cheaper inertial measurement units (IMUs), e.g. MEMS IMUs. The issue can be mitigated to some extent by using larger and more expensive navigation-grade IMUs, but even these still suffer from drift of between 1 and 2 NM/hour. Barometric altimeters are sometimes used in combination with IMUs in order to stabilise the height estimate in the inertial solution.

TRN matches measured terrain data with terrain data stored in a map in order to calculation position. Terrain measurements can be obtained using a radar altimeter (RADALT), and these are correlated with stored terrain elevation data (e.g. a Digital Terrain Elevation Database, DTED) along the aircraft's travel path in order to produce a navigation solution. TRN can be used to mitigate the effects of inertial navigation drift in a blended solution. TRN can also provide an independent position estimate. Other useful sources of navigation data which can be used to improve the overall accuracy of a blended navigation solution include overfly fixes, star trackers, doppler systems, radar stations, etc.

Some navigation systems also use systems which determine position based on wireless signals received from external transmitters. GNSS is one example of such a system, where position, velocity and time are determined using time-stamped data received from a global network of satellites. Other such systems include round-trip timing navigation systems which utilise time-stamped radio signals transmitted from ground-based radio transmitters, and radar stations with radio transmitters which transmit radio signals to vehicles within their detection range indicating the position of the vehicle as detected by the radar station.

Such sources of navigation data which rely on wireless signals received from external transmitters are useful as they typically provide accurate position, velocity and time estimates when working correctly. However, these systems are not always reliable as they are vulnerable to interference, e.g. they can be jammed, spoofed, blocked, etc. by competing transmissions. This can cause problems where these systems are heavily relied on by navigation systems, and it can sometimes be difficult to detect such interference until the blended navigation solution has already been corrupted.

### SUMMARY OF THE INVENTION

When viewed from a first aspect, this disclosure provides a navigation system comprising:
a plurality of information sources suitable for use in determining a position estimate of the navigation system, the plurality of information sources comprising:
   an inertial navigation system (INS) arranged to repeatedly determine an inertial-based position estimate based on one or more signals received from an inertial measurement unit (IMU); and
   a receiver arranged to receive one or more wireless signals from one or more external transmitters;
a first calculation unit arranged to repeatedly determine a first position estimate based on at least some information derived from one or more of the information sources;
a second calculation unit arranged to repeatedly determine a second position estimate based on at least some information derived from one or more of the information sources; and
a selection unit arranged to repeatedly:
   determine which of the first position estimate and the second position estimate is more reliable; and
   select one of the first position estimate and the second position estimate for output as an output position estimate based on said determination;
wherein, over a period of time comprising a plurality of determinations of the first position estimate by the first calculation unit and a plurality of determinations of the second position estimate by the second calculation unit:
the first calculation unit is arranged to determine the first position estimate based on a first set of information derived from one or more of the information sources; and
the second calculation unit is arranged to determine the second position estimate based on a second set of information derived from one or more of the information sources;
wherein the first set of information contains a subset of information derived from one more of the information sources that is not contained in the second set of information.

When viewed from a second aspect, this disclosure provides a method of determining an output position estimate of a navigation system comprising a plurality of information sources for use in determining a position estimate of the navigation system, the plurality of information sources comprising an inertial navigation system (INS) and a receiver, the method comprising:
repeatedly determining, using the INS, an inertial-based position estimate based on one or more signals received from an inertial measurement unit (IMU)
receiving, using the receiver, one or more wireless signals from one or more external transmitters;
repeatedly determining a first position estimate based on at least some information derived from one or more of the information sources;
repeatedly determining a second position estimate based on at least some information derived from one or more of the information sources; and
repeatedly determining which of the first position estimate and the second position estimate is more reliable; and
repeatedly selecting one of the first position estimate and the second position estimate for output as the output position estimate based on said determination;
wherein, over a period of time comprising a plurality of determinations of the first position estimate and the second position estimate:
the first position estimate is determined based on a first set of information derived from one or more of the information sources; and
the second position estimate is determined based on a second set of information derived from one or more of the information sources;
wherein the first set of information contains a subset of information derived from one or more of the information sources that is not contained in the second set of information.

The present disclosure may therefore provide a navigation system with two (or more) calculation units operating in parallel to determine respective position estimates using different sets of information derived from the information sources. This may enable the selection unit to identify divergences between the position estimates, and such divergences may be attributed to the subset of information which is not used by both calculation units (and thus the associated information sources). The selection unit may then determine the relative reliability of the position estimates output by the calculation units (e.g. in the event of a divergence), and select one of these for output as an output position estimate or navigation solution. This may advantageously enable the navigation system to identify problematic information sources based on the two (or more) position estimates, and select to use a different position estimate as the output position estimate which is less reliant on those problematic information sources. Thus, the present disclosure may enable overall navigation accuracy to be maintained even in the event of one or more information sources generating unreliable navigation data. The first calculation unit may be a primary calculation unit and the second calculation unit may be a backup calculation unit in the event that the first position estimate is deemed to be unreliable.

In a set of examples, the first set of information contains at least some information derived from the receiver; and the second set of information contains no information derived from the receiver. This may enable the navigation system to utilise the high accuracy of position determination based on wireless signals received from external transmitters when such signals are reliable, whilst also maintaining a navigation solution which is less reliant on these wireless signals for position determination for use as a backup in the event that the received signals are jammed, spoofed, or blocked, rendering the signals less reliable. Such unreliability in the received signals can cause the reliability or accuracy of the first position estimate to decrease slowly, over a period of time (e.g. by being intentionally spoofed to cause this effect). Not only can this be difficult to detect, it can cause loss in accuracy for the first position estimate for a prolonged period of time even after a decision is made to stop using information derived from the signals received from external transmitters. This is because the decrease in accuracy of the first position estimate caused by the unreliability of the signals received from the external transmitters can result in the first position estimate continuing to be inaccurate for a period of time after such a decision is made, unless a different source of navigation data is available to 'zero' or reset the position estimate back to a true position or a more accurate position. Often, no such alternative source is available. Inaccurate navigation data, even for a short period of time, can be dangerous - e.g. in circumstances where terrain or other vehicles are present around a vehicle relying on navigation data to avoid these.

Thus, in such examples, since the second position estimate is less reliant on the wireless signals received from external transmitters for accuracy, it may be less affected by such unreliability in those wireless signals and therefore maintain greater accuracy than the first position estimate in circumstances where the signals received from external transmitters are unreliable. Such examples may therefore allow overall navigation accuracy to be maintained in such circumstances by selecting to use the second position estimate as the output position estimate.

The period of time referred to above may be any given period of time spanning multiple determinations of the first and second position estimates. The first and second calculation units may determine the respective first and second position estimates at the same frequency.

In a set of examples, the first set of information contains information derived from each of the plurality of information sources; and the second set of information contains information derived from a subset of the plurality of information sources. This may advantageously enable the first position estimate to be as accurate as possible while all the information sources are reliable, since it is determined based on information derived from each of the information sources.

In a set of examples, the first calculation unit is arranged, each time the receiver has received one or more further wireless signals from one or more external transmitters since the previous determination of the first position estimate, to determine the first position estimate based on at least some information derived from the one or more further wireless signals received by the receiver; and
the second calculation unit is arranged to not determine the second position estimate based on information derived from any wireless signals received by the receiver in any determination of the second position estimate. In such examples the accuracy of the first position estimate may be advantageously maximised while the wireless signals received from external transmitters are reliable, and the accuracy of the second position estimate may be kept largely independent of any unreliability in the wireless signals received from external transmitters.

In a set of examples, the receiver is arranged to repeatedly determine a receiver-based position estimate based on the one or more wireless signals received from one or more external transmitters; the first set of information contains one or more of the receiver-based position estimates; and
the second set of information contains fewer of the receiver-based position estimates than the first set of information. This may advantageously reduce the processing burden on the calculation units by processing the wireless signals received from one or more external transmitters at the receiver itself. In a set of examples, the second set of information contains none of the receiver-based position estimates. The receiver-based position estimates may be considered to be information derived from the receiver.

The first calculation unit may determine a first uncertainty associated with the first position estimate. The second calculation unit may determine a second uncertainty associated with the second position estimate. The uncertainties can be used at least in part to determine the reliabilities of the position estimates. It should be noted that uncertainty is not the same as reliability. For example, a position estimate with a large uncertainty can still be considered reliable when the true position is encompassed within that position estimate and its associated large uncertainty (e.g. if an uncertainty is expressed as +/- a certain distance then the position is considered reliable when the difference between the true position and the position estimate is less than the uncertainty). On the other hand, if a position estimate has a low uncertainty, i.e. suggesting that the position estimate is accurate, but this combination of position estimate and uncertainty does not encompass the true position (e.g. if the difference between the true position and the position estimate is greater than the uncertainty), then the position estimate may be considered unreliable. It will be appreciated that the true position is generally not known, so further analysis and/or information will typically be combined with the uncertainties in the determination of reliability.

In a set of examples the receiver-based position estimate determined by the receiver further comprises an uncertainty associated with the receiver-based position estimate. In some examples the receiver comprises a radio receiver arranged to receive one or more radio signals from one or more external radio transmitters. In some examples the receiver comprises a global navigation satellite system (GNSS) receiver, the receiver-based position estimate comprises a GNSS position estimate, and the one or more external transmitters comprise GNSS satellites.

In a set of examples, the plurality of information sources further comprises at least one sensor arranged to repeatedly output one or more signals indicative of an elevation of terrain below a position of the navigation system; and
the navigation system further comprises a terrain elevation map comprising terrain elevation data; the first calculation unit is arranged to repeatedly determine a first terrain-based position estimate (and optionally an associated uncertainty) based on a comparison between the one or more signals output by the at least one sensor and terrain elevation data extracted from the terrain elevation map, and the first set of information contains one or more of the first terrain-based position estimates and one or more of the inertial-based position estimates determined by the INS; and
the second calculation unit is arranged to repeatedly determine a second terrain-based position estimate based on a comparison between the one or more signals output by the at least one sensor and terrain elevation data extracted from the terrain elevation map, and to determine the second position estimate further based on the second terrain-based position estimate. The first and second terrain-based position estimates may each be considered to be information derived from the at least one sensor, and the inertial-based position estimates may be considered to be information derived from the INS. The uncertainty associated with the terrain-based position estimate may be used at least in part in the determination of reliability.

In a set of examples, each calculation unit is arranged to repeatedly:
estimate terrain elevation at a location below the navigation system based on the one or more signals output by the at least one sensor;
determine the respective terrain-based position estimate (and optionally a respective associated uncertainty) based on a correlation between a track of terrain elevation estimates and terrain elevation data extracted from the terrain elevation map.

In such examples the accuracy of the position estimates determined by the calculation units, particularly the second position estimate, may be increased by using terrain-referenced navigation to provide another source of navigation data.

In some examples the at least one sensor comprises a radar altimeter (RADALT). It may also comprise a barometric altimeter. The calculation units may estimate the terrain elevation at a location below the navigation system by comparing the signals output by the RADALT and the signals output by the barometric altimeter.

The selection unit may determine which of the first and second position estimates is more reliable in any appropriate manner. For example, it may make this determination based on a manual input received from a user of the navigation system or a signal received from e.g. a control tower. However, in a set of examples, the selection unit is arranged to repeatedly:
compare the first position estimate and the second position estimate;
compare the first uncertainty and the second uncertainty; and
determine which of the first and second position estimates is more reliable based on said comparisons.

The calculation units determining uncertainties in this manner may advantageously provide a convenient mechanism for the selection unit to compare the reliabilities of the first and second position estimates. The first and second uncertainties may each be based on any subset of information used by the first and second calculation units to determine the first and second position estimates. For example, the first and second uncertainties may be based on any one or more of: the inertial-based position estimate, an uncertainty associated with the inertial-based position estimate, the respective terrain-based position estimates, the respective uncertainties associated with respective terrain-based position estimates, information derived from the one or more wireless signals received from the one or more external transmitters (e.g. the receiver-based position estimate and/or the uncertainty associated therewith, or a receiver-based velocity estimate and/or an uncertainty associated therewith), the respective first and second position estimates determined by the calculation units in one or more previous determinations, the respective first and second uncertainties associated with the first and second position estimates determined in one or more previous determinations.

In a set of examples, the selection unit is arranged, by default, to select the first position estimate for output as the output position estimate and to repeatedly:
determine a covariance of the first and second position estimates over a plurality of determinations thereof by the respective calculation units;
determine which of the first and second position estimates is more reliable further based on the covariance of the first and second position estimates; and
determine that the second position estimate is more reliable, and output the second position estimate as the output position estimate, in the event that:
   the current second uncertainty is below a threshold; and
   the difference between the current first and second position estimates exceeds a threshold and/or the covariance of the first and second position estimates is below a threshold.

The covariance of the first and second position estimates may provide a numerical indicator of how the first and second position estimates have changed over time relative to each other, and thus enable the selection unit to take this into account while determining which of the position estimates is more reliable. A change in the covariance may indicate that the relationship between the two estimates has changed and thus might indicate the presence of some unwanted interference on one of the position estimates which may thus be determined as less reliable. Such examples may advantageously enable the selection unit to perform a detailed comparison between the determinations of the calculation units and thus make an informed determination of which position estimate is more reliable. Such examples may also advantageously ensure that the most reliable position estimate is consistently selected for output as the output position estimate by the selection unit, since the first position estimate (which is likely to be more accurate than the second position estimate under normal circumstances where the wireless signals received from external transmitters are reliable) is selected for output as the output position estimate by default. The second position estimate may be conditionally selected where the uncertainties and comparisons indicate that there is a deviation between the two position estimates, and that the cause of this is likely due to unreliability in the wireless signals received from the external transmitters and not due to drift in inertial navigation data or terrain-referenced navigation data used by the second calculation unit.

In a set of examples, the navigation system further comprises a data pipeline comprising a memory, wherein the data pipeline is arranged to receive and store in the memory for a predetermined time period information derived from each of the information sources. Such examples may advantageously enable navigation data obtained from various sources to be stored for a period of time and referenced at a later time in order to e.g. correct any errors therein.

In a set of examples, the data pipeline is arranged to repeatedly perform a synchronisation operation between the information derived from each of the plurality of information sources in order to generate time-synchronised information;
the first and second calculation units are arranged to determine the first and second position estimates and the first and second uncertainties respectively based on at least some of the time-synchronised information from the data pipeline; and
the first and second sets of information each contain time-synchronised information from the data pipeline.

Some information sources may take different amounts of time to process at the sources themselves (e.g. the one or more wireless signals received from one or more external transmitters) in order to generate data useful for position estimation, and different information sources may require different amounts of time to be processed appropriately before provision to the calculation units. Such examples may therefore advantageously ensure that the data used by the calculation units to determine the respective position estimates is time-synchronised, thus improving overall accuracy by mitigating the effects of non-synchronisation between different information sources.

In a set of examples, the selection unit is arranged to output one or more corrections to the INS based on the position estimate selected for output as the output position estimate, and the INS is arranged to determine the inertial-based position estimate based further on the corrections received from the selection unit. The corrections may also be based on the uncertainty associated with the position estimate selected to be output as the output position estimate. Such examples may advantageously allow the navigation system to counteract drift in the inertial-based position estimate using other sources of navigation data, and thus improve the accuracy of the position estimates determined by the calculation units since these are both determined based on the inertial-based position estimate at least to some extent.

In a set of examples, the data pipeline is arranged to receive and store for a period of time the one or more corrections output by the selection unit. In a set of examples, in an event that the selection unit changes which of the position estimates determined by the calculation units is selected for output as the output position estimate, the data pipeline is arranged to output one or more corrections to the INS and/or to the calculation units which effectively reverse one or more of the corrections stored in the data pipeline. Such examples may provide a convenient mechanism for quickly reconfiguring the navigation system to accommodate a switch in which position estimate is selected for output as the output position.

In a set of examples, the receiver is further arranged to repeatedly determine one or more distance values each indicative of a distance relative to an external transmitter from which a wireless signal was received based on the one or more wireless signals received by the receiver, and the data pipeline is arranged to receive and store in the memory for the predetermined period of time each of said one or more distance values;
in the event that the selection unit changes which of the position estimates determined by the calculation units is selected for output as the output position estimate, the data pipeline is arranged to identify one or more of the distance values stored therein and output one or more signals indicative of the identified distance values to the receiver; and
the receiver is arranged to ignore wireless signals received from the external transmitters associated with the identified distance values for at least a period of time.

Such examples may advantageously enable the navigation system to identify one or more problematic external transmitters (e.g. ones which are being spoofed) and accommodate for this while still being able to make use of other wireless signals received from other external transmitters for position determination. This may advantageously enable the first position estimate to quickly return to normal accuracy levels following an inaccuracy caused by unreliability in a subset of the wireless signals received from the external transmitters, thereby improving overall accuracy of the first position estimate (and therefore the output position estimate) long-term.

In a set of examples, the first calculation unit comprises a first iterative algorithm unit (IAU) arranged, in each iteration, to update the first position estimate and a first uncertainty associated with the first position estimate for the next iteration based on the current first position estimate, the current first uncertainty, and at least some information derived from one or more of the information sources;
the second calculation unit comprises a second IAU arranged, in each iteration, to update the second position estimate and a second uncertainty associated with the second position estimate for the next iteration based on the current second position estimate, the current second uncertainty, and at least some information derived from one or more of the information sources; and
the period of time comprises a plurality of iterations of the first calculation unit and a plurality of iterations of the second calculation unit.

Such examples may increase the overall accuracy of the position estimates determined by the calculation units by enabling them to iteratively refine those position estimates, rather than calculate them from scratch in each determination. The calculation units may be arranged to update the respective position estimates and uncertainties for the next iteration based on the respective terrain-based position estimates where this is determined and optionally based on the respective uncertainty associated with the terrain-based position estimate where this is determined. The calculation units may be arranged to update the position estimates and uncertainties for the next iteration based on the receiver-based position estimate where this is determined based on the one or more wireless signals received from one or more external transmitters.

In a set of examples, over the period of time, the first calculation unit is arranged to update the first position estimate and first uncertainty based on information derived from the receiver in a greater number of iterations than the second calculation unit is arranged to update the second position estimate and second uncertainty based on information derived from the receiver.

In a set of examples, each calculation unit comprises a Kalman filter.

In a set of examples, the navigation system further comprises a third calculation unit arranged to repeatedly determine a third position estimate based on at least some information derived from one or more of the information sources;
the period of time comprises a plurality of determinations of the third position estimate by the third calculation unit;
over the period of time, the third calculation unit is arranged to determine the third position estimate (and optionally an associated third uncertainty) based on a third set of information derived from one or more of the information sources; and
the selection unit is arranged to determine which of the first, second and third position estimates is more reliable, and to select one of the first, second and third position estimates for output as the output position estimate based on said determination;
wherein:
the first set of information contains a subset of information derived from one or more of the information sources that is not contained in the third set of information; and
the third set of information contains a subset of information derived from one or more of the information sources that is not contained in the second set of information.

Such examples may provide the navigation system with another position estimate, determined independently from the first and second position estimate, using a different set of information derived from the information sources. This may provide the navigation system with more options for the output position estimate, and provide the selection unit with more information which it can use to make the determination of reliability. This may advantageously improve the overall accuracy of the output position estimate, and improve the ability for the navigation system to identify divergences between the position estimates, and to attribute such divergences to a particular subset of information (and thus the associated information sources).

The third calculation unit may be arranged to further determine a third uncertainty associated with the third position estimate based on the third set of information derived from the one or more information sources over the period of time.

The third calculation unit and/or third set of information may have any one or more of the features described above or below in relation to the first and/or second calculation units provided these conditions regarding the respective sets of information derived from the one or more information sources are met. For example, the third calculation unit may determine and use a third terrain-based position estimate and an associated uncertainty in the same manner as described above with reference to the first and second calculation units, and it may comprise an IAU operating in a similar manner to the first and second calculation units. For example, the third set of information may contain information derived from a subset of the plurality of information sources (said subset being a different subset from that contained in the second set of information), it may contain one or more of the receiver-based position estimates, it may contain one or more determinations of the third terrain-based position estimate and/or one or more of the inertial position estimates output by the INS, it may contain time-synchronised information from the data pipeline, etc. Similarly, the selection unit may be arranged to perform any comparison between determinations made by the third calculation unit and any of the determinations made by the first and second calculation units as described above (e.g. a calculation of a covariance). Any feature of the navigation system discussed above or below which refers to either of the first and second calculation units or the first and second position estimates should be considered to be equally applicable to the third calculation unit, provided the above-mentioned relationships between the first, second and third sets of information are met.

In some examples, each respective position estimate output by each calculation unit comprises a three-dimensional position estimate e.g. a latitude, a longitude, and an altitude. Similarly, the inertial-based position estimates, the terrain-based position estimates and/or the receiver-based position estimates may also comprise three-dimensional position estimates.

In a set of examples, the third set of information contains a smaller amount of information derived from the receiver than the first set of information, and the third set of information contains a greater amount of information derived from the receiver than the second set of information. This may provide a convenient mechanism for ensuring the third calculation unit places a lower reliance on the one or more wireless signals received from external transmitters for position determination than the first calculation unit, but a higher reliance than the second calculation unit.

In a set of examples, the receiver is arranged to repeatedly determine a or the receiver-based position estimate based on the one or more wireless signals received from one or more external transmitters;
the receiver is arranged to repeatedly determine a receiver-based velocity estimate based on the one or more wireless signals received from one or more external transmitters;
the first set of information contains one or more of the receiver-based position estimates and one or more of the receiver-based velocity estimates;
the second set of information contains none of the receiver-based position estimates and none of the receiver-based velocity estimates; and
the third set of information contains one or more of the receiver-based velocity estimates and none of the receiver-based position estimates.

The receiver-based velocity estimates determined by the receiver may be determined based on the doppler-shift of the wireless signals received by the receiver. The receiver-based velocity estimates may be generally more reliable than the receiver-based position estimates, since it may be more difficult to spoof wireless signals in order to influence the receiver-based velocity estimates than to influence the receiver-based position estimates. Such examples may therefore provide another convenient mechanism for ensuring that the first calculation unit places a high reliance on the wireless signals received from external transmitters for position determination, the second calculation unit places a low or zero reliance on those wireless signals for position determination, and the third calculation unit places a reliance on those wireless signals for position determination lying somewhere between the first and second calculation units.

In a set of examples, the navigation system further comprises:
a or the at least one sensor arranged to output one or more signals indicative of an elevation of terrain below a position of the navigation system; and
a or the terrain elevation map comprising terrain elevation data; and
wherein the third calculation unit is arranged to:
repeatedly determine a third terrain-based position estimate and an associated uncertainty based on a comparison between the one or more signals output by the at least one sensor and terrain elevation data extracted from the terrain elevation map, and the third set of information contains one or more of the third-terrain-based position estimates and one or more of the inertial-based position estimates determined by the INS; and
the third calculation unit is arranged to determine the third position estimate based on at least some information derived from the receiver each time the uncertainty associated with the third terrain-based position estimate exceeds a threshold.

Such examples may provide another convenient mechanism for ensuring the third calculation unit places a reliance on the one more wireless signals received from external transmitters for position determination somewhere between that placed by the first and second calculation units, whereby the third calculation unit only uses the wireless signals received from external transmitters for position determination in the event that the terrain-based position estimate is not sufficiently accurate to ensure accuracy of the third position estimate e.g. as a result of flat terrain or the navigation system passing over a body of water.

The navigation system may comprise any number of calculation units (e.g. four, five, six, or more) with each additional calculation unit using a unique set of information derived from one or more of the information sources to determine a respective position estimate over the period of time, with each additional calculation unit omitting a different subset of available information from its respective set of information. Each additional calculation unit may have any of the features described above in relation to the first, second and third calculation units. The first set of information may contain all available information from the one or more information sources (thus providing a main calculation unit which provides an accurate position estimate under normal conditions), and each other set of information may contain a unique subset of the available information. Providing additional calculation units in this manner may enable the selection unit to more easily identify divergences between the position estimates, and to make a more informed decision as to which position estimate is the most reliable. It may also provide a convenient mechanism for the selection unit to identify which information derived from the one or more information sources is causing such a divergence.

In a set of examples, the navigation system further comprises an output unit arranged to output the output position estimate as a visual indication to a user of the navigation system and/or to output the output position estimate to an autopilot unit and/or to output the output position estimate to a non-volatile memory for storage and/or to a transmitter for wireless transmission to one or more external receivers.

In a set of examples, navigation system comprises a processor and a memory comprising instructions which, when executed by the processor, cause the processor to perform the function of each of the calculation units.

When viewed from a third aspect, this disclosure provides a navigation system comprising:
an inertial navigation system (INS) arranged to repeatedly determine an inertial-based position estimate based on one or more signals received from an inertial measurement unit (IMU);
a receiver arranged to receiver one or more wireless signals from one or more external transmitters;
a first calculation unit arranged to repeatedly determine a first position estimate based on at least a current inertial-based position estimate;
a second calculation unit arranged to repeatedly determine a second position estimate based on at least a current inertial-based position estimate; and
a selection unit arranged to determine which of the first position estimate and the second position estimate is more reliable, and select one of the first position estimate and the second position estimate for output as an output position estimate based on said determination;
wherein, over a period of time comprising a plurality of determinations of the first position estimate by the first calculation unit and a plurality of determinations of the second position estimate by the second calculation unit:
the first calculation unit is arranged to determine the first position estimate based on a first quantity of information derived from the one or more signals received by the receiver; and
the second calculation unit is arranged to determine the second position estimate based on a second quantity of information derived from the one or more signals received by the receiver, the second quantity of information being smaller than the first quantity of information.

When viewed from a fourth aspect, this disclosure provides a navigation system comprising:
a plurality of information sources suitable for use in determining a position estimate of the navigation system, the plurality of information sources comprising:
   an inertial navigation system (INS) arranged to repeatedly determine an inertial-based position estimate, an inertial-based velocity estimate and an inertial-based attitude estimate based on one or more signals received from an inertial measurement unit (IMU);
   a receiver arranged to determine a receiver-based position estimate and a receiver-based velocity estimate based on one or more wireless signals received from one or more external transmitters;
   a ranging sensor arranged to measure a distance from the navigation system to terrain located below the navigation system;
   a terrain referenced navigation system arranged to determine a terrain-based position estimate based on a correlation of measurements from the ranging sensor with onboard terrain elevation data;
a first calculation unit arranged to repeatedly determine a first position estimate and an associated first uncertainty based on information derived from a first set of the plurality of information sources;
a second calculation unit arranged to repeatedly determine a second position estimate and an associated second uncertainty based on information derived from a second set of the plurality of information sources, different to the first set; and
a selection unit arranged to repeatedly:
   determine which of the first position estimate and the second position estimate is more reliable based on the first position estimate, the first uncertainty, the second position estimate and the second uncertainty; and
   select one of the first position estimate and the second position estimate for output as an output position estimate based on said determination.

The various aspects of the disclosure set out above all relate to the same general concept and to the same systems. It will therefore be appreciated that preferred and optional features set out above in relation to one aspect are equally applicable, where appropriate, to each of the other aspects. In particular, it will be appreciated that any features of the navigation system described above in relation to the first aspect may be equally applied to the method of the second aspect, and vice versa. Likewise, the third and fourth aspects relate to the same systems as the first aspect such that examples described in relation to the first aspect are equally applicable to, and compatible with, the third and fourth aspects. Where reference is made to different embodiments or examples, it should be understood that these are not necessarily distinct but may overlap.

### BRIEF DESCRIPTION OF THE DRAWINGS

One or more non-limiting examples will now be described, with reference to the accompanying drawings in which:
Fig. 1 is a schematic functional block diagram illustrating a navigation system in accordance with the present disclosure; and
Fig. 2 is a schematic hardware block diagram illustrating a navigation system in accordance with the present disclosure.

### DETAILED DESCRIPTION OF THE DRAWINGS

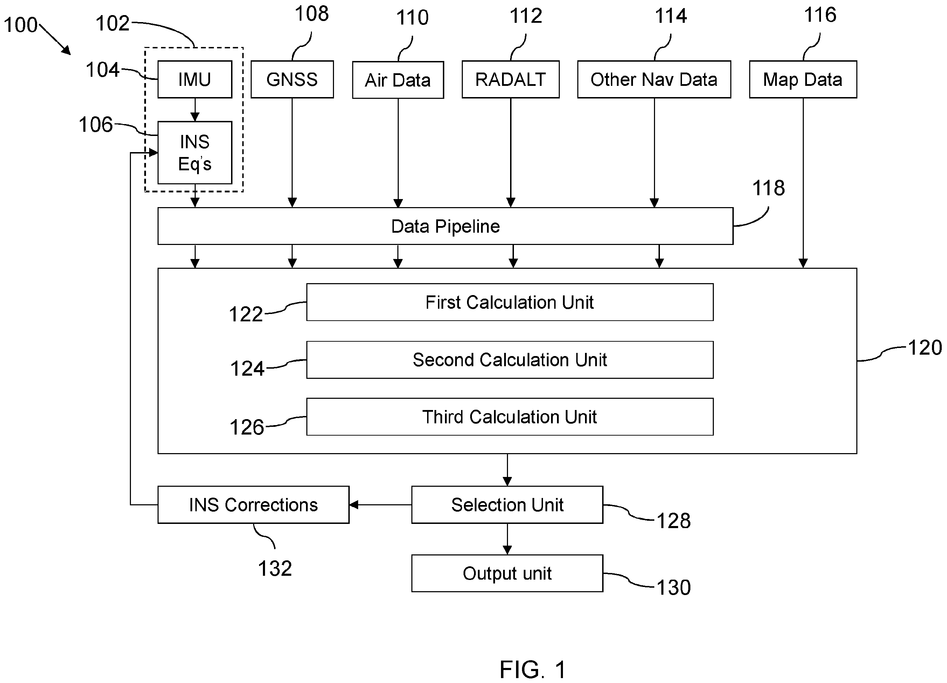

Fig. 1 is a schematic functional block diagram illustrating a navigation system 100 in accordance with an example of the disclosure. The navigation system 100 comprises: an inertial navigation system (INS) 102 comprising an inertial measurement unit (IMU) 104 and a inertial navigation equation processor 106; a global navigation satellite system (GNSS) receiver 108; one or more air data sensors 110 comprising a barometric altimeter (not shown in Fig. 1); a radar altimeter (RADALT) 112; one or more other navigation aids 114 including e.g. compass readings, non-directional beacon receivers, automatic direction finders, radar navigation, etc.; and a memory 116 storing a terrain elevation map comprising terrain elevation data. The navigation system 100 also comprises a data pipeline 118; a navigation processor 120 comprising a first calculation unit 122, a second calculation unit 124 and a third calculation unit 126; a selection unit 128, and an output unit 130.

The IMU 104 comprises one or more accelerometers and gyroscopes (not shown in Fig. 1) which output signals indicative of linear and angular acceleration respectively to the inertial navigation equation processor 106 in the INS 102. In this particular example the IMU comprises (at least) three accelerometers with orthogonal sensing axes and three gyroscopes with orthogonal sensing axes in order to enable inertial measurement in three-dimensions. The inertial navigation equation processor 106 uses the signals output by the IMU 104, along with one or more INS corrections 132 received from the selection unit 128 as described in more detail below, to calculate an inertial-based position estimate of the navigation system 100. It also calculates various other states of the navigation system including a velocity estimate, heading, acceleration, etc. as is well-known in the art. The INS 102 outputs this inertial-based position estimate to the data pipeline 118.

The GNSS receiver 108 receives one or more radio signals from GNSS satellites, which it uses to calculate a receiver-based position estimate and a receiver-based velocity estimate of the navigation system 100, using processes known in the art. The GNSS receiver 8 outputs the receiver-based position estimate and the receiver-based velocity estimate to the data pipeline 118.

The one or more air data sensors 110 includes a barometric altimeter which measures air pressure in order to determine the altitude of the navigation system 100, and may include one or more other sensors including e.g. air speed sensors. These signals are output by the one or more air data sensors 110 to the data pipeline 118.

The RADALT 112 comprises one or more downward facing radar transceivers which measure the distance between the navigation system 100 and terrain below the navigation system 100 using radiolocation, as is known in the art. The RADALT 112 outputs signals indicative of the distance between the navigation system 100 and the terrain to the data pipeline 118.

The one or more other navigational aids 114 also output signals to the data pipeline 116, these signals being dependent on what navigational aids are included in the one or more other navigational aids 114. In some examples the one or more navigational aids 114 could be omitted.

The data pipeline 118 comprises a memory (not shown in Fig. 1) which it uses to store signals received from the INS 102, the GNSS receiver 108, the one or more air data sensors 110, the RADALT 112, and the one or more other navigational aids 114 for a predetermined period of time - e.g. fifteen seconds, thirty seconds or a minute (purely by way of example). This is determined in this example by placing a respective cap on the amount of memory which may be occupied by data received from each of the modules 102, 108, 110, 112, 114, dependent on the regularity with which each module 102, 108, 110, 112, 114 outputs new data. When the data pipeline 118 has filled the memory allocated for storage of data received from each of the modules 102, 108, 110, 112, 114, and new data is received from a module 102, 108, 110, 112, 114, the data pipeline 118 removes the oldest data from the memory and stores the new data instead so as to store the data received from each module 102, 108, 110, 112, 114 from the last fifteen seconds (or thirty seconds or minute, etc) - essentially forming a memory buffer.

The data pipeline 118 also performs a synchronisation operation on data it receives from the modules 102, 108, 110, 112, 114 in which it determines the time at which data received from those modules was valid (e.g. where a module outputs data with a small delay relative to the time it was valid - the GNSS receiver 108 being one example of this), and synchronises the data based on the determined times at which it was valid. The data pipeline 118 then outputs the synchronised data received from the modules 102, 108, 110, 112, 114 to the navigation processor 120.

In some examples, the data pipeline 118 could be omitted, with the INS 102, GNSS receiver 108, one or more air data sensors 110, RADALT 112, one or more other navigation aids 114 each outputting their various respective signals directly to the navigation processor 120 and the navigation processor 120 performing any synchronisation operations required itself, if synchronisation is required.

The navigation processor 120 comprises three calculation units 122, 124, 126 which each operate independently and simultaneously to each other. In alternative examples, the navigation processor 120 may comprise only two calculation units, or any number of calculation units greater than three. In this example each of the calculation units 122, 124, 126 is an iterative algorithm unit (IAU), specifically a Kalman filter. The first calculation unit 122 iteratively, and repeatedly, determines a first position estimate for the navigation system 100 and an associated uncertainty which is output to the selection unit. The second calculation unit 124 iteratively, and repeatedly, determines a second position estimate for the navigation system 100 and an associated uncertainty which is output to the selection unit 128. The third calculation unit 126 iteratively, and repeatedly, determines a third position estimate for the navigation system which is output to the selection unit 128. The first, second and third position estimates are three-dimensional coordinates e.g. latitude, longitude and altitude.

In each iteration, each of the calculation units 122, 124, 126 being a respective Kalman filter determines a state vector comprising the respective first, second or third position estimate, and one or more further state variables associated with signals received from each of the signals output by any of the modules 102, 108, 110, 112, 114 - e.g. velocity along each of three orthogonal axes, acceleration along each of three orthogonal axes, altitude, heading, etc. Each of the calculation units being a respective Kalman filter determines an error state vector comprising the respective uncertainty associated with the first, second or third position estimates, and uncertainties associated with each of the other variables included in the respective state vector. In each iteration, each calculation unit 122, 124, 126 updates the state vector (including a least the respective first, second or third position estimate) and the error state vector based on the state vector and error state vector determined in the previous iteration, and based on one or more signals received from one or more of the modules 102, 108, 110, 112, 114 (via the data pipeline 118) and/or terrain elevation data extracted from the terrain elevation map 116. This allows each calculation unit 122, 124, 126 to use a combination of data received from the modules 102, 108, 110, 112, 114 to generate a respective position estimate with a greater accuracy than e.g. the inertial position estimate output by the INS alone. This process of updating the state vector and the error state vector based on a signal from one of the modules 102, 108, 110, 112, 114, 116 in a given iteration is known as taking an observation of a particular variable or signal. Since the general operation of a Kalman filter is known in the art this is not described in full detail herein for the sake of brevity.

Each of the calculation units 122, 124, 126 in this example is configured to determine an estimate of the elevation of terrain below the navigation system based on signals output by at least the RADALT 112, and preferably also using signals output by the barometric altimeter within the one or more air data sensors 110. Alternatively, it may determine the elevation of terrain based on signals output only by the RADALT 112 and the respective first, second or third position estimate from the previous iteration. This terrain elevation estimate is then compared with terrain elevation data extracted from the terrain elevation map 116 in order to determine a respective first, second or third terrain-based position estimate, and a respective associated uncertainty. More specifically, each terrain-based position estimate is calculated by correlating a track of terrain elevation estimates over time with terrain elevation data extracted from the terrain elevation map 116. Each respective terrain-based position estimate and associated uncertainty forms part of the respective state vector calculated by each of the calculation units 122, 124, 126.

The first calculation unit 122 uses the inertial position estimate output by the INS 102, the receiver-based position estimate and receiver-based velocity estimate output by the GNSS receiver 108, and the first terrain-based position estimate, in order to determine the first position estimate and the error state vector in each iteration as described previously. It may also use the one or more air data sensors 110 or other navigation aids 114, and any other state estimates output by the INS 102. In particular, the first calculation unit 122 is arranged to take observations from the INS 102, the GNSS receiver 108, and determine a terrain-based position estimate as described previously, each time that modules related to these signals/position estimates provide new data. This generally ensures that the first position estimate determined by the first calculation unit 122 uses a combination of the inertial-based position estimate, the receiver-based position estimate, and the respective terrain-based position estimate as often as these are updated. This means that the first calculation unit 122 uses all available data sources to determine the first position estimate, as often as possible, and thus maximises the accuracy for the first position estimate assuming that the data received is reliable (particularly the receiver-based position estimate received from the GNSS receiver 108).

The second calculation unit 124 uses the inertial position estimate output by the INS 102, and the second terrain-based position estimate as described above, in order to determine the second position estimate. It may also use the one or more air data sensors 110 or other navigation aids 114, and any other state estimates output by the INS 102. However, the second calculation unit 124 does not determine the second position estimate based on signals output by the GNSS receiver 108 - i.e. based on the receiver-based position estimate or receiver-based velocity estimate - in any iteration. As is described in more detail below, this ensures that the second position estimate is largely independent of the receiver-based position estimate and the receiver-based velocity estimate output by the GNSS receiver 108. However, this does mean that, typically, the second position estimate determined by the second calculation unit 124 is less accurate than the first position estimate determined by the first calculation unit 122, since it does not make use of the GNSS receiver 108 which is typically an accurate source of navigation data.

The third calculation unit 126 uses the inertial position estimate output by the INS 102, and the third terrain-based position estimate as described above, in order to determine the third position estimate. It may also use the one or more air data sensors 110 or other navigation aids 114, and any other state estimates output by the INS 102. The third calculation unit 126 uses signals output by the GNSS receiver 108 in order to determine the third position estimate more frequently than the second calculation unit 124 uses signals output by the GNSS receiver 108 to determine the second position estimate (in this example the second position estimate uses no GNSS data), but less frequently than the first calculation uses signals output by the GNSS receiver 108 to determine the first position estimate. This can be implemented in a number of ways. For example, in one example the third calculation unit 126 determines the third position estimate based on signals output by the GNSS receiver 108 at regular time intervals - e.g. by taking an observation of the receiver-based position estimate and receiver-based velocity estimate once every ten seconds (whereas the first position estimate would typically use receiver-based position and velocity updates every second). In another example, the third calculation unit 126 determines the third position estimate based on signals output by the GNSS receiver 108 (i.e. takes an observation of receiver-based position estimate and the receiver-based velocity estimate) each time the uncertainty associated with the third terrain-based position estimate exceeds a threshold value. In another example, the third calculation unit 126 determines the third position estimate based on the receiver-based velocity estimate each time this is updated by the GNSS receiver 108, but does not determine the third position estimate based on the receiver-based position estimate in any iteration.

The selection unit 128 receives the first, second and third position estimates from the first, second and third calculation units 122, 124, 126 respectively, along with the respective state vectors determined by the calculation units 122, 124, 126 which include the uncertainty associated with the respective first, second or third position estimates. The selection unit 128 compares each of the first, second and third position estimates, and their respective associated uncertainties, and optionally one or more other of the state variables and uncertainties included in the respective state vectors and error state vectors and/or other available information, in order to determine which of the first, second or third position estimate is more reliable. In this example, the selection unit 128 makes this determination based on a direct comparison between each of the position estimates, and between the uncertainties associated therewith, and by determining a covariance between each pair of position estimates, and optionally between the uncertainties associated therewith. The selection unit 128 does this in each iteration - i.e. each time the first, second and third position estimates are updated by the calculation units 122, 124, 126 respectively. The selection unit 128 selects to output the position estimate it determines to be the most reliable position estimate to the output unit 130. The output unit 130 includes any one or more of a display for providing the selected position estimate as a visual indication to a user of the navigation system (e.g. a head-up display, a screen, etc.), an autopilot unit which automatically controls a vehicle on which the navigation system is installed based on the selected position estimate, a non-volatile memory for storage of the position estimate (e.g. a black box in an aircraft), and a transmitter (e.g. a radio transmitter) for transmitting the selected position estimate to one or more external transmitters for the purposes of position tracking.

By default, the selection unit 128 selects the first position estimate output by the first calculation unit 122 to output to the output unit 130, since under normal conditions this position estimate is likely to be the most accurate since it makes full use of the GNSS receiver 108 (which under normal conditions generates an accurate receiver-based position estimate and receiver-based velocity estimate), as well as the other modules 102, 110, 112, 114, 116. In the event that the difference between the first position estimate and the second or third position estimate exceeds a threshold, and/or the covariance between the first position estimate and the second or third position estimate exceeds a threshold and/or an analysis of the uncertainties suggests that one of the position estimates is unreliable (e.g. if they are inconsistent), the selection unit 128 is able to ascertain that either the GNSS receiver 108, or the terrain-based position estimate, is inaccurate and thus causing a divergence between the position estimates. The divergence being caused by the INS 102 is unlikely since all three of the calculation units 122, 124, 126 use the inertial-based position estimate to determine their respective position estimates.

Since the second calculation unit 124 is not arranged to use the GNSS receiver 108 when determining the second position estimate in any iteration, and as the terrain-based estimate is hard to falsify, if the uncertainty associated with the second position estimate is below a threshold (i.e. it is deemed to be accurate), the selection unit 128 may ascertain that the cause of the divergence is more likely to be due to inaccuracies in the receiver-based position estimate and/or receiver-based velocity estimate determined by the GNSS receiver 108, rather than due to drift in the terrain-based position estimates. Such inaccuracies can arise particularly as a result of spoofing, where GNSS signals are falsified by e.g. ground-based radio transmitters in order to cause the GNSS receiver 108 to determine an inaccurate receiver-based position estimate. The selection unit 128 can therefore select to output the second position estimate output by the second calculation unit in response to this determination. More detailed analysis on reliability can also be carried out. For example, where three position estimates are available, two of them are consistent and the third one is inconsistent, the third one may be deemed to be less reliable. Additionally, covariance analysis between pairs of position estimates over time can reveal a change in the progression of one position estimate indicative of a reduction in its reliability (e.g. the commencement of interference in the corresponding information source).

It will thus be seen that the provision of multiple independent calculation units 122, 124, 126 which have differing levels of reliance on the GNSS receiver 108, together with the selection unit 128, enables the navigation system 100 to continually generate a navigation solution of sufficient accuracy and reliability even in the event of interference in the GNSS signals, and provides a mechanism for detecting such interference.

The selection unit 128 also outputs one or more INS corrections 132 to the INS 102 which the inertial navigation processor 106 uses to correct for IMU drift. The INS corrections 132 output by the selection unit 128 are determined based on the position estimate selected for output to the output unit 130 by the selection unit 128. The selection unit 128 may determine these corrections itself e.g. based on the state vector and error state vector output by the selected calculation unit 122, 124, 126, or the calculation units 122, 124, 126 themselves may determine the corrections 132. These INS corrections 132 form a feedback loop for the INS 102 in order to help maintain the accuracy of the inertial-based position estimate over time.

In the event that the selection unit 128 changes which position estimate it outputs to the output unit 130, the INS corrections 132 it outputs to the INS 102 cause the inertial navigation processor 106 to change its output appropriately for the current state of the newly selected calculation unit 122, 124, 126.

The data pipeline 118, as well as storing data or signals received from the modules 102, 108, 110, 112, 114 over time as discussed above, also receives the INS corrections 132 from the INS 102 (or directly from the selection unit 128 depending on implementation) and stores these for a predetermined period of time, e.g. fifteen seconds. In this example this is implemented by placing a memory cap on storage of the corrections 132, as described previously, although it will be appreciated that this could also be implemented in other ways.

In the event that the selection unit 128 identifies a divergence between the position estimates output by the different calculation units 122, 124, 126, the data pipeline 118 analyses the data stored therein (including the stored corrections 132 as well as data received from the modules 102, 108, 110, 112, 114) in order to determine the time at which it is likely the cause of the divergence started. If the data pipeline 118 is able to ascertain that the cause happened within the predetermined time period for which the data is stored in the pipeline 118, the selection unit 128 may identify one or more entries stored in the pipeline 118 (particularly those received from the GNSS receiver 108) as being inaccurate, and e.g. delete or flag the inaccurate entries. The data pipeline 118 then outputs to the navigation processor 120 one or more of the signals which weren't identified as inaccurate by the pipeline 118, and the calculation units 122, 124, 126 update their respective position estimates, state vectors and error state vectors based on the corrected data. This advantageously allows the first calculation unit 122 in particular to disregard inaccurate GNSS data stored in the pipeline 118, and thus correct the first position estimate for the next iteration. This process effectively allows any of the calculation units to replay the stored time period but without using the unreliable data, thereby rapidly reproducing a more reliable position estimate. The selection unit 128 can then continue (or switch back to) outputting the default first position estimate to the output unit 130, rather than the second or third position estimates which are generally less accurate than the first position estimate, and thus maximise the overall accuracy of the navigation solution.

The data pipeline 118 can if necessary also outputs one or more corrections back to the INS 102 which cause it to reverse the corrections applied thereto since the time at which the data pipeline 118 determines that the cause of the divergence likely happened. This advantageously helps reverse any inaccuracies in the inertial-based position estimate output by the INS 102 which may have been caused by the cause of the divergence.

In this example, in the event that it is determined that the GNSS receiver 108 is the cause of the divergence, the data pipeline 118 can also be arranged to identify one or more transmitters from which GNSS signals were received as being the cause of the divergence, and transmit a signal to the GNSS receiver 108 which causes it to stop taking signals received from those one or more transmitters into account when determining the receiver-based position and/or velocity estimates, at least for a period of time. This may advantageously improve the accuracy of receiver-based position and velocity estimates determined by the GNSS receiver 108 for future iterations. This is useful in the case that data from only one, or a small number of, satellites is inconsistent. Other satellites which remain reliable can still be used for accurate position estimation.

It will be appreciated that the principles discussed above are equally applicable for interference (e.g. spoofing) in sources of navigation data other than GNSS signals, e.g. round-trip timing navigation systems which utilise time-stamped radio signals transmitted from ground-based radio transmitters, radio signals transmitted by radar stations which indicate the position of the navigation system as detected by the radar station. In such cases, multiple calculation units with differing levels of reliance on those sources of navigation data can be used to ensure continually accurate generation of a navigation solution even in circumstances where interference is occurring in a similar manner to that discussed above in relation to GNSS receivers. It will also be appreciated that the principles discussed above are equally applicable for communications other than radio communications, e.g. visible light or infrared communications, sonar communications, etc.

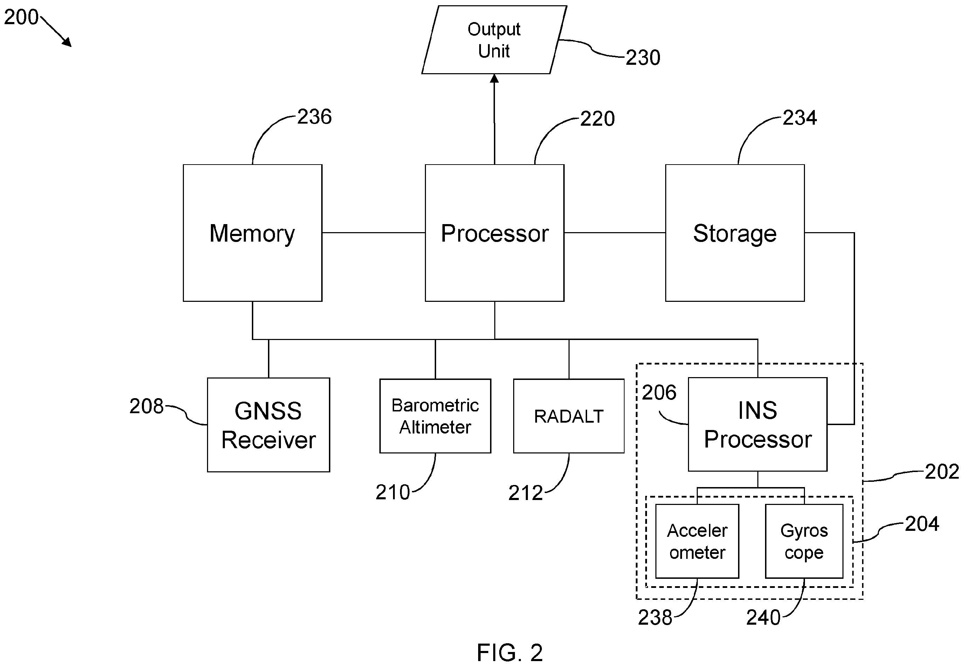

Fig. 2 is a schematic hardware block diagram illustrating a navigation system 200 in accordance with an example of the invention. The navigation system 200 comprises an INS 202, a GNSS receiver 208, a barometric altimeter 210, a RADALT 212, a navigation processor 220, an output unit 230, a non-volatile memory 234 (e.g. a hard-disk drive, a solid-state drive, flash memory, eeprom, etc.), and a volatile memory 236 (e.g. a DRAM, SRAM, etc.). The INS 202 comprises an IMU 204, and an INS processor 206. The IMU 204 comprises three orthogonal accelerometers 238 and three orthogonal gyroscopes 240. The navigation system 200 may comprise further modules as described previously with reference to the navigation system 100 of Fig. 1, but these are omitted here for the sake of brevity.

The accelerometers 238 and the gyroscopes 240 of the IMU 204 are connected to the INS processor 206. The GNSS receiver 208, the barometric altimeter 210, the RADALT 212 and the INS processor 206 are connected to the navigation processor 220 and to the volatile memory 236. The INS processor 206 is also connected to the non-volatile memory 234. The navigation processor 220 is connected to the non-volatile memory 234, to the volatile memory 236 and to the output unit 230.

The navigation system 200 operates in substantially the same manner as the navigation system 100 described previously with reference to Fig. 1. The non-volatile memory 234 comprises computer-readable instructions which, when executed by the INS processor 206 with use of the volatile memory 236, cause it to perform the functions of the INS processor 104 described previously. The non-volatile memory 234 also comprises computer-readable instructions which, when executed by the navigation processor 220 with use of the volatile memory 236, cause it to perform the functions of the navigation processor 120 including the functions of the calculation units 122, 124, 126 described previously, the functions of the selection unit 128 described previously, and the functions of the data pipeline 118 described previously.

It will be appreciated by those skilled in the art that the navigation system 200 is just one possible example of hardware which could be used to implement the functions of the navigation system 100 described with reference to Fig. 1. In other examples, the INS processor 206 and the navigation processor 220 could be implemented using the same processor core. Each of the calculation units 122, 124, 126 could be implemented using distinct processor cores, rather than using a single processor core 220 as shown in Fig. 2. The selection unit 128 and/or the data pipeline 118 could be implemented using different processor cores to the calculation units 122, 124, 126. The INS processor 206 and the processor 220 could be connected to and operate using their own dedicated volatile and/or non-volatile memories.

It will be appreciated by those skilled in the art that this disclosure has been illustrated by describing one or more specific examples thereof, but is not limited to these examples; many variations and modifications are possible, within the scope of the accompanying claims.

## Claims

1. A navigation system comprising:
a plurality of information sources suitable for use in determining a position estimate of the navigation system, the plurality of information sources comprising:
an inertial navigation system (INS) arranged to repeatedly determine an inertial-based position estimate based on one or more signals received from an inertial measurement unit (IMU); and
a receiver arranged to receive one or more wireless signals from one or more external transmitters;
a first calculation unit arranged to repeatedly determine a first position estimate based on at least some information derived from one or more of the information sources;
a second calculation unit arranged to repeatedly determine a second position estimate based on at least some information derived from one or more of the information sources; and
a selection unit arranged to repeatedly:
determine which of the first position estimate and the second position estimate is more reliable; and
select one of the first position estimate and the second position estimate for output as an output position estimate based on said determination;
wherein, over a period of time comprising a plurality of determinations of the first position estimate by the first calculation unit and a plurality of determinations of the second position estimate by the second calculation unit:
the first calculation unit is arranged to determine the first position estimate based on a first set of information derived from one or more of the information sources; and
the second calculation unit is arranged to determine the second position estimate based on a second set of information derived from one or more of the information sources;
wherein the first set of information contains a subset of information derived from one or more of the information sources that is not contained in the second set of information.

2. A navigation system as claimed in claim 1, wherein:
the first set of information contains at least some information derived from the receiver; and
the second set of information contains no information derived from the receiver.

3. A navigation system as claimed in claim 1 or 2, wherein:
the first set of information contains information derived from each of the plurality of information sources; and
the second set of information contains information derived from a subset of the plurality of information sources.

4. A navigation system as claimed in any preceding claim, wherein:
the receiver is arranged to repeatedly determine a receiver-based position estimate based on the one or more wireless signals received from one or more external transmitters;
the first set of information contains one or more of the receiver-based position estimates; and
the second set of information contains fewer of the receiver-based position estimates than the first set of information;
optionally wherein the second set of information contains none of the receiver-based position estimates.

5. A navigation system as claimed in any preceding claim, wherein the receiver comprises a global navigation satellite system (GNSS) receiver, the receiver-based position estimate comprises a GNSS position estimate, and the one or more external transmitters comprise GNSS satellites.

6. A navigation system as claimed in any preceding claim, wherein:
the plurality of information sources further comprises at least one sensor arranged to repeatedly output one or more signals indicative of an elevation of terrain below a position of the navigation system;
the navigation system further comprises a terrain elevation map comprising terrain elevation data;
the first calculation unit is arranged to repeatedly determine a first terrain-based position estimate based on a comparison between the one or more signals output by the at least one sensor and terrain elevation data extracted from the terrain elevation map, and the first set of information contains one or more of the first terrain-based position estimates and one or more of the inertial-based position estimates determined by the INS; and
the second calculation unit is arranged to repeatedly determine a second terrain-based position estimate based on a comparison between the one or more signals output by the at least one sensor and terrain elevation data extracted from the terrain elevation map, and the second set of information contains one or more of the second terrain-based position estimates and one or more of the inertial-based position estimates determined by the INS; and
optionally wherein each calculation unit is arranged to repeatedly:
estimate terrain elevation at a location below the navigation system based on the one or more signals output by the at least one sensor;
determine the respective terrain-based position estimate and the respective associated uncertainty based on a correlation between a track of terrain elevation estimates and terrain elevation data extracted from the terrain elevation map

7. A navigation system as claimed in any preceding claim, wherein the selection unit is arranged to repeatedly:
compare the first position estimate and the second position estimate;
compare a first uncertainty associated with the first position estimate and a second uncertainty associated with the second position estimate; and
determine which of the first and second position estimates is more reliable based on said comparisons.

8. A navigation system as claimed in claim 7, wherein the selection unit is arranged, by default, to select the first position estimate for output as the output position estimate and to repeatedly:
determine a covariance of the first and second position estimates over a plurality of determinations thereof by the respective calculation units;
determine which of the first and second position estimates is more reliable further based on the covariance of the first and second position estimates; and
determine that the second position estimate is more reliable, and output the second position estimate as the output position estimate, in the event that:
the current second uncertainty is below a threshold; and
the difference between the current first and second position estimates exceeds a threshold and/or the covariance of the first and second position estimates is below a threshold.

9. A navigation system as claimed in any preceding claim, wherein the navigation system further comprises a data pipeline comprising a memory, wherein:
the data pipeline is arranged to receive and store in the memory for a predetermined time period information derived from each of the plurality of information sources;
the data pipeline is arranged to repeatedly perform a synchronisation operation between the information derived from each of the plurality of information sources in order to generate time-synchronised information;
the first and second calculation units are arranged to determine the first and second position estimates respectively based on at least some of the time-synchronised information from the data pipeline; and
the first and second sets of information each contain time-synchronised information from the data pipeline.

10. A navigation system as claimed in any preceding claim, wherein:
the selection unit is arranged to output one or more corrections to the INS based on the position estimate selected for output as the output position estimate;
the INS is arranged to determine the inertial-based position estimate based further on the corrections received from the selection unit; and
the data pipeline is arranged to receive and store in the memory for a predetermined time period the one or more corrections output by the selection unit; and
optionally wherein, in an event that the selection unit changes which of the position estimates determined by the calculation units is selected for output as the output position estimate, the data pipeline is arranged to output one or more corrections to the INS and/or to the calculation units which effectively reverse one or more of the corrections stored in the data pipeline.

11. A navigation system as claimed in claim 10, wherein:
the receiver is further arranged to repeatedly determine one or more distance values each indicative of a distance relative to an external transmitter from which a wireless signal was received based on the one or more wireless signals received by the receiver, and the data pipeline is arranged to receive and store in the memory for the predetermined period of time each of said one or more distance values;
in the event that the selection unit changes which of the position estimates determined by the calculation units is selected for output as the output position estimate, the data pipeline is arranged to identify one or more of the distance values stored therein and output one or more signals indicative of the identified distance values to the receiver; and
the receiver is arranged to ignore signals received from the external transmitters associated with the identified distance values for at least a period of time.

12. A navigation system as claimed in any preceding claim, wherein:
the first calculation unit comprises a first iterative algorithm unit (IAU) arranged, in each iteration, to update the first position estimate and a first uncertainty associated with the first position estimate for the next iteration based on the current first position estimate, the current first uncertainty, and at least some information derived from one of more of the information sources;
the second calculation unit comprises a second IAU arranged, in each iteration, to update the second position estimate and a second uncertainty associated with the second position estimate for the next iteration based on at least the current second position estimate, the current second uncertainty, and at least some information derived from one or more of the information sources;
the period of time comprises a plurality of iterations of the first calculation unit and a plurality of iterations of the second calculation unit; and
over the period of time, the first calculation unit is arranged to update the first position estimate and first uncertainty based on information derived from the receiver in a greater number of iterations than the second calculation unit is arranged to update the second position estimate and second uncertainty based on information derived from the receiver.

13. A navigation system as claimed in any preceding claim, wherein:
the navigation system further comprises a third calculation unit arranged to repeatedly determine a third position estimate based on at least some information derived from one or more of the information sources;
the period of time comprises a plurality of determinations of the third position estimate by the third calculation unit;
over the period of time, the third calculation unit is arranged to determine the third position estimate based on a third set of information derived from one or more of the information sources; and
the selection unit is arranged to determine which of the first, second and third position estimates is more reliable, and to select one of the first, second and third position estimates for output as the output position estimate based on said determination;
wherein:
the first set of information contains a subset of information derived from one or more of the information sources that is not contained in the third set of information; and
the third set of information contains a subset of information derived from one or more of the information sources that is not contained in the second set of information;
optionally wherein:
the third set of information contains a smaller amount of information derived from the receiver than the first set of information; and
the third set of information contains a greater amount of information derived from the receiver than the second set of information.

14. A navigation system as claimed in claim 13, wherein:
the receiver is arranged to repeatedly determine a or the receiver-based position estimate based on the one or more wireless signals received from one or more external transmitters;
the receiver is arranged to repeatedly determine a receiver-based velocity estimate based on the one or more wireless signals received from one or more external transmitters;
the first set of information contains one or more of the receiver-based position estimates and one or more of the receiver-based velocity estimates;
the second set of information contains none of the receiver-based position estimates and none of the receiver-based velocity estimates; and
the third set of information contains one or more of the receiver-based velocity estimates and none of the receiver-based position estimates.

15. A method of determining an output position estimate of a navigation system comprising a plurality of information sources for use in determining a position estimate of the navigation system, the plurality of information sources comprising an inertial navigation system (INS) and a receiver, the method comprising:
repeatedly determining, using the INS, an inertial-based position estimate based on one or more signals received from an inertial measurement unit (IMU);
receiving, using the receiver, one or more wireless signals from one or more external transmitters;
repeatedly determining a first position estimate and an associated first uncertainty based on at least some information derived from one or more of the information sources;
repeatedly determining a second position estimate and an associated second uncertainty based on at least some information derived from one or more of the information sources;
repeatedly determining which of the first position estimate and the second position estimate is more reliable; and
repeatedly selecting one of the first position estimate and the second position estimate for output as the output position estimate based on said determination;
wherein, over a period of time comprising a plurality of determinations of the first position estimate and the second position estimate:
the first position estimate is determined based on a first set of information derived from one or more of the information sources; and
the second position estimate is determined based on a second set of information derived from one or more of the information sources;
wherein the first set of information contains a subset of information derived from one or more of the information sources that is not contained in the second set of information.
